# EUROPEAN PATENT APPLICATION

(11) **EP 2 733 616 A1**
(43) Date of publication of application: **21.05.2014**
(21) Application number: 12878645.6
(22) Date of filing: 16.08.2012
(51) Int. Cl.: G06F 12/00

(54) **TERMINAL AND FILE ACCESS METHOD THEREFOR**

(71) Applicant: Huawei Device Co., Ltd., Shenzhen, Guangdong 518129 (CN)
(72) Inventor: CHEN, Lei, Shenzhen Guangdong 518129 (CN)
(74) Representative: Körber, Martin Hans
(86) International application number: PCT/CN2012/080194
(87) International publication number: WO 2014/026343

(57) **Abstract**

Embodiments of the present invention provide a method and a terminal for accessing a file of a terminal, to implement uniform management of a built-in SD card and an external SD card in a smart terminal, thereby effectively improving utilization of storage space of the smart terminal. The terminal includes a user space file system, where when at least two storage areas are set in the terminal, the user space file system is configured to manage the at least two storage areas. The method includes: receiving a request for accessing a file, where the access request includes a first file path and the first file path is an access path of the file; converting the first file path into a second file path according to a path mapping list of the user space file system when the first file path points to the user space file system, where the second file path is an actual storage path of the file in the at least two storage areas; and accessing the file according to the second file path.

## Description

### TECHNICAL FIELD

Embodiments of the present invention relate to the field of terminals, and in particular, to a method and a terminal for accessing a file of a terminal.

### BACKGROUND

With the development of mobile communications technologies, functions of a mobile terminal are increasingly complex and highly efficient, and a smart terminal becomes more and more popular in people's life. Currently, the smart terminal universally uses an EMMC (Embedded Multi Media Card) chip as a built-in storage medium. The EMMC chip has relatively large storage capacity, and system files of the smart terminal generally do not need to use such large space. Therefore, generally one area is separately split on the EMMC chip to store files except for the system files. In the industry, this storage area is often called a built-in SD card. Correspondingly, the smart terminal universally supports an external SD card so as to ensure expansibility of user storage space.

Therefore, this means that two storage areas, the built-in SD card and the external SD card, simultaneously exist on a smart mobile phone, bringing an issue of selecting a primary card or a secondary card. For a majority of third-party application programs, it only considers that an /SDcard directory corresponds to an SD card of a mobile phone instead of differentiating the built-in SD card from the external SD card. For this reason, only one storage area can be mapped to the /SDcard directory. This storage area is called the primary card, which is usually the built-in SD card. The other card, that is, the external SD card, serves as the secondary card and can only be mapped to a directory such as /SDcard/external that cannot be identified by the third-party application programs. The solution has the following problem: According to a current method for accessing a file, the third-party application programs cannot access the directory of the secondary card, and extended space of the secondary card cannot be effectively used by the third-party application programs, causing a waste and low utilization of storage space.

### SUMMARY

Embodiments of the present invention provide a method and a terminal for accessing a file of a terminal, so as to resolve a problem that a current storage system has low storage efficiency.

In a first aspect, the terminal includes a user space file system, where when at least two storage areas are set in the terminal, the user space file system is configured to manage the at least two storage areas. The method includes: receiving a request for accessing a file, where the access request includes a first file path and the first file path is an access path of the file; converting the first file path into a second file path according to a path mapping list of the user space file system when the first file path points to the user space file system, where the second file path is an actual storage path of the file in the at least two storage areas; and accessing the file according to the second file path.

In a first possible implementation manner of the first aspect, the access request includes at least one of a read request and a write request.

In a second possible implementation manner, with reference to the first aspect or the first possible implementation manner of the first aspect, after the first file path points to the user space file system and before the first file path is converted into the second file path according to the path mapping list of the user space file system, the method further includes: when the path mapping list does not include a second file path related to the first file path and the access request is a write request, allocating a second file path to the file and writing a mapping between the first file path and the allocated second file path into the path mapping list, where available storage space of a storage area to which the allocated second file path points is no smaller than storage space that is required by a file to be written in the write request.

In a third possible implementation manner, with reference to the second possible implementation manner, the allocating a second file path to the file includes: when the storage space that is required by the file to be written in the file write request is larger than available storage space of any storage area, allocating at least two second file paths to the first file path from the path mapping list, so that a sum of available storage space of at least two storage areas to which the at least two second file paths point is no smaller than the storage space that is required by the file to be written in the file write request.

In a second aspect, the terminal includes a user space file system, where when at least two storage areas are set in the terminal, the user space file system is configured to manage the at least two storage areas, and the terminal further includes: an access request receiving unit, configured to receive a request for accessing a file, where the access request includes a first file path and the first file path is an access path of the file; a path converting unit, configured to convert the first file path into a second file path according to a path mapping list of the user space file system when the first file path points to the user space file system, where the second file path is an actual storage path of the file in the at least two storage areas; and a file accessing unit, configured to access the file according to the second file path.

In a first possible implementation manner of the second aspect, the access request includes at least one of a read request and a write request.

In a second possible implementation manner, with reference to the second aspect or the first possible implementation manner of the second aspect, the terminal further includes: a path mapping list determining unit, configured to determine whether the path mapping list includes a second file path related to the first file path when the first file path points to the user space file system, and send an executing command to a second file path allocating unit when a result of the determination is no; and the second file path allocating unit, configured to allocate, when the result of the determination performed by the path mapping list determining unit is no and the access request is a write request, a second file path to the file, and write a mapping between the first file path and the allocated second file path into the path mapping list, where available storage space of a storage area to which the allocated second file path points is no smaller than storage space that is required by a file to be written in the write request.

In a third possible implementation manner, with reference to the second possible implementation manner, the second file path allocating unit includes: a second file path allocating subunit, configured to allocate at least two second file paths to the first file path from the path mapping list when the storage space that is required by the file to be written in the file write request is larger than available storage space of any storage area, so that a sum of available storage space of at least two storage areas to which the at least two second file paths point is no smaller than the storage space that is required by the file to be written in the file write request.

In a third aspect, the terminal includes a processor and a storage, where the storage includes a user space file system; and when the storage includes at least two storage areas, the user space file system manages the at least two storage areas, and the processor is configured to execute the following process: receiving a request for accessing a file, where the access request includes a first file path and the first file path is an access path of the file; converting the first file path into a second file path according to a path mapping list of the user space file system when the first file path points to the user space file system, where the second file path is an actual storage path of the file in the at least two storage areas; and accessing the file according to the second file path.

In a first possible implementation manner of the third aspect, the access request includes at least one of a read request and a write request.

In a second possible implementation manner, with reference to the third aspect or the first possible implementation manner of the third aspect, after the first file path points to the user space file system and before the first file path is converted into the second file path according to the path mapping list of the user space file system, the processor is further configured to execute the following process: when the path mapping list does not include a second file path related to the first file path and the access request is a write request, allocating a second file path to the file and writing a mapping between the first file path and the allocated second file path into the path mapping list, where available storage space of a storage area to which the allocated second file path points is no smaller than storage space that is required by a file to be written in the write request.

In a third possible implementation manner, with reference to the second possible implementation manner, a process of allocating, by the processor, a second file path to the file includes: when the storage space that is required by the file to be written in the file write request is larger than available storage space of any storage area, allocating at least two second file paths to the first file path from the path mapping list, so that a sum of available storage space of at least two storage areas to which the at least two second file paths point is no smaller than the storage space that is required by the file to be written in the file write request.

In the method and the terminal according to the embodiments of the present invention, a path mapping list is set in a user space file system, so that an original virtual path of a file, that is, a first file path, may be converted according to the path mapping list during file access to obtain an actual storage path to which the access request points, that is, a second file path. The actual storage path is uniformly allocated according to a built-in SD card and an external SD card instead of being allocated merely according to a certain storage card. In this way, a built-in SD card and an external SD card in a smart terminal may be uniformly managed, thereby effectively improving utilization of storage space of the smart terminal.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a flowchart of a method for accessing a file of a terminal according to Embodiment 1 of the present invention;
FIG. 2 is a flowchart of a method for accessing a file of a terminal according to Embodiment 2 of the present invention;
FIG. 3 is a schematic structural diagram of a terminal according to Embodiment 3 of the present invention;
FIG. 4 is a schematic structural diagram of a terminal according to Embodiment 4 of the present invention;
FIG. 5 is a structural diagram of a terminal according to Embodiment 5 of the present invention; and
FIG. 6 is a structural diagram of a terminal according to Embodiment 6 of the present invention.

### DESCRIPTION OF EMBODIMENTS

To illustrate the objective, technical solutions, and advantages of the present invention more clearly, the following further describes the specific embodiments of the present invention in detail with reference to the accompanying drawings.

### Embodiment 1

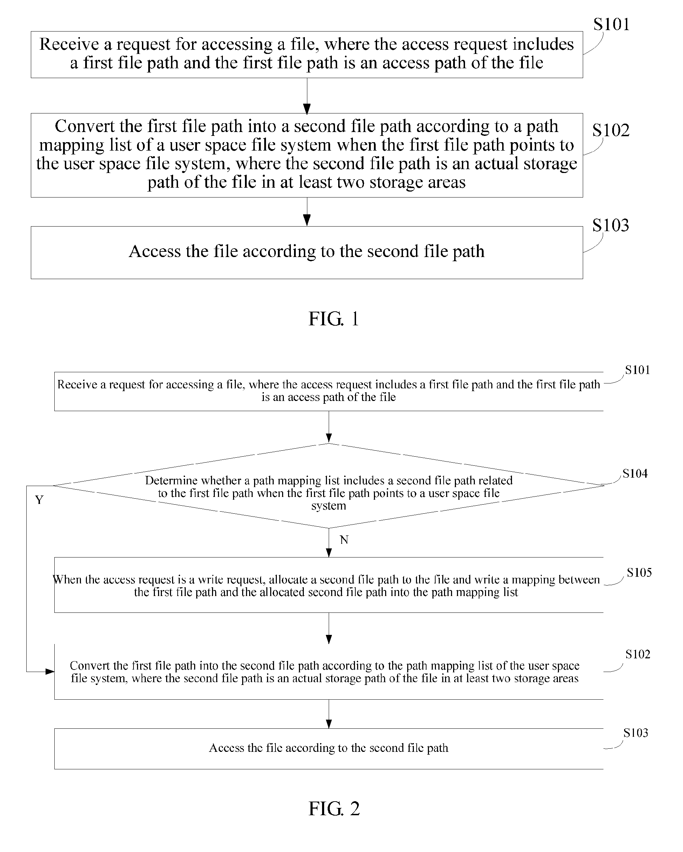

Embodiment 1 of the present invention provides a method for accessing a file of a smart terminal, where the terminal includes a user space file system. When at least two storage areas are set in the terminal, the user space file system is configured to manage the at least two storage areas. FIG. 1 is a flowchart of the method according to Embodiment 1 of the present invention. The following describes in detail the method according to Embodiment 1 of the present invention with reference to FIG. 1.

S101. Receive a request for accessing a file, where the access request includes a first file path, the first file path is an access path of the file, and the access path of the file is a virtual path of the file managed by the user space file system.

S102. Convert the first file path into a second file path according to a path mapping list of the user space file system when the first file path points to the user space file system, where the second file path is an actual storage path of the file in the at least two storage areas. For example, the at least two storage areas may include a built-in SD card and an external SD card in the terminal.

S103. Access the file according to the second file path.

In the method according to Embodiment 1 of the present invention, a path mapping list is set in a user space file system, so that an original virtual path of a file, that is, a first file path, may be converted according to the path mapping list during file access to obtain an actual storage path to which the access request points, that is, a second file path. The actual storage path is uniformly allocated according to a built-in SD card and an external SD card instead of being allocated merely according to a certain storage card. In this way, a built-in SD card and an external SD card in a smart terminal may be uniformly managed, thereby effectively improving utilization of storage space of the smart terminal.

### Embodiment 2

Embodiment 2 of the present invention provides a method for accessing a file of a smart terminal, where the terminal includes a user space file system. When at least two storage areas are set in the terminal, the user space file system is configured to manage the at least two storage areas. FIG. 2 is a flowchart of the method according to Embodiment 2 of the present invention. The following describes in detail the method according to Embodiment 2 of the present invention with reference to FIG. 2.

S101. Receive a request for accessing a file, where the access request includes a first file path and the first file path is an access path of the file.

The request for accessing a file is an access request that points to a file in a storage of the terminal, the access request includes an access path and an access command of the file, and the access path of the file is a virtual path of the file managed by the user space file system, that is, the first file path. For example, the access path usually uses /SDcard as a root menu. For example, the access path may be /SDcard/ttchat. The first file path is included in the access request received by the terminal and belongs to a part of a received input value. The access request may be from an application program of the terminal or a third-party program outside the terminal, and this is not limited herein in the embodiment of the present invention. Further, the access request may include a read request and a write request.

In practical application, for example, the access request may occur when a user clicks an application program icon to open an application program, and in this case, the access request is a request of the application program for accessing a file of the application program stored in a storage area of the terminal. The access request may also occur when the application program needs to access another file in the storage area of the terminal, and the another file may be a file such as an image, music, video, or user information file. A relationship between an access subject and an access obj ect of the access request is not limited in the embodiment of the present invention.

S104. Determine whether a path mapping list of the user space file system includes a second file path related to the first file path when the first file path points to the user space file system, and execute step 102 if yes or execute step 105 if no.

Specifically, in a manner of determining whether the first file path points to the user space file system, by using an Android system as an example, a virtual file system (VFS, Virtual File System) determines, after the access request is received, whether the first file path points to the user space file system. When the first file path points to the user space file system, the VFS sends the access request to the user space file system. That is, the virtual file system determines whether the first file path points to the user space file system, and the first file path is virtually managed by the user space file system and can be accessed only after the user space file system performs address translation. Actually, when the first file path is virtually managed by the user space file system, the first file path is a virtual path and does not point to an actual storage area. In this case, a path mapping list needs to be used to convert the first file path into an actual storage path, that is, the second file path.

The user space file system is FUSE, that is, Filesystem in Userspace, which is a file system completely implemented in a user state. Using the Android system again for an example, memory of the Android system is divided into kernel space and user space. A feature of the FUSE lies in that free switching between the kernel space and the user space can be performed, the kernel space is used to complete functions related to a kernel, and the user space is used to complete functions related to the user space. Therefore, in terms of implementation of the present invention, after receiving the access request, a processor first sends the access request to the VFS of the kernel space for locating. When the VFS determines that the first file path in the access request points to the FUSE, because the VFS does not have a permission of free switching between the kernel space and the user space, the VFS first sends the access request to the kernel space of the FUSE system. Then the kernel space of the FUSE system sends the access request to the user space of the FUSE. Later, the path mapping list converts the first file path into the second file path in the user space, and the access request is again sent to the VFS in the kernel space, so that a second access is implemented according to the second file path.

The path mapping list is a list that stores a mapping between the first file path and the second file path related to the first file path, and is content added to the user space file system in the embodiment of the present invention. The path mapping list may be preset according to an initial value of a storage area of the terminal, and updated when the storage area of the terminal changes. A process of the presetting and the updating is: for each first file path for which the path mapping list does not include a mapping, allocating a second file path for a file to be accessed that corresponds to each first file path, and incorporating correspondence between the first file path and the allocated second file path into the path mapping list. Certainly, the foregoing description is only intended to describe implementability of the embodiment of the present invention and shall not be construed as a limitation to the embodiment of the present invention. The change of the storage area includes but is not limited to adding of a storage area or change of content stored in the storage area, and the change of the content stored in the storage area includes but is not limited to adding or deleting of a folder or a folder, modifying of a name, or the like. Preferably, to ensure a query rate during routine use, the path mapping list may be stored as a part of the FUSE system into memory of the user space during routine application and maintenance, and backed up in a storage area of the terminal; and when the path mapping list changes, the path mapping list in the storage area is synchronously backed up; or the path mapping list is periodically backed up. For example, an independent file may be created in a system backup folder of a built-in SD card of the terminal to serve as a backup file of the path mapping list, and is synchronously backed up when the path mapping list changes. In this way, after the terminal is restarted upon power-off, the memory can restore the path mapping list according to the backup file. Certainly and alternatively, the path mapping list may also be stored in a storage area of the terminal, and accessed each time the path mapping list needs to be used.

S105. When the path mapping list does not include a second file path related to the first file path and the access request is a write request, allocate a second file path to the file and write a mapping between the first file path and the allocated second file path into the path mapping list, and execute step S102. The second file path is an actual storage path of the file in the at least two storage areas, and available storage space of a storage area to which the allocated second file path points is no smaller than storage space that is required by a file to be written in the write request. Alternatively, when the access request is a read request, path invalid information is returned to prompt the terminal and further prompt the user that the path is invalid, and this is not limited in the embodiment of the present invention.

Optionally, a storage policy may be preset when the second file path is allocated to the file. For example, a storage policy of preferring the built-in SD card may be preset, or a storage policy of preferentially writing into a storage area with relatively large remaining space is used, and this is not limited in the embodiment of the present invention. After the second file path is allocated to the file, the mapping between the first file path and the allocated second file path is written into the path mapping list. A specific writing format is determined by a current format of the path mapping list. For details, refer to a description of content about the path mapping list in step S102.

In addition, it should be noted that when the second file path is allocated to the file, the available storage space of the storage area to which the allocated second file path points needs to be no smaller than the storage space that is required by the file to be written in the write request. When available storage space of any storage area of the terminal is smaller than the storage space that is required by the file to be written in the write request, the following processing may be performed according to different situations:

When original storage space of the storage area is no smaller than the storage space that is required by the file to be written in the write request, at least two second file paths may be allocated to the file, so that a sum of available storage space of at least two storage areas to which the at least two second file paths point is no smaller than the storage space that is required by the file to be written in the file write request. Certainly and preferably, a file storage location may be adjusted between the storage areas to ensure that available storage space of at least one storage area is no smaller than the storage space that is required by the file to be written in the file write request. For example, an application data folder of a certain application program is created on the built-in SD card, and remaining space of the built-in SD card keeps decreasing as application data keeps growing, thereby causing a problem of insufficient available storage space. In this case, a folder may be adjusted between storage areas. For example, the application data catalogue folder of the application program may be wholly transferred to another storage area with sufficient available storage space (or another folder on the built-in SD card is transferred to another storage area, where adjustment may be flexibly performed according to a principle of storing folders of a same application program into a same storage area). This ensures that all application data of the application program is stored in the same storage area. On one hand, efficiency of the application program in accessing the application data is ensured; on the other hand, an application directory of the application program does not need to be split, thereby reducing a size of the path mapping list as much as possible and improving storage efficiency.

When the original storage space of the storage area is smaller than the storage space that is required by the file to be written in the write request, it cannot be ensured that available storage space of at least one storage area is no smaller than the storage space that is required by the file to be written in the file write request, even if the file storage location is adjusted. Therefore, in this case, at least two second file paths need to be allocated for the first file path, so that a sum of available storage space of at least two storage areas to which the at least two second file paths point is no smaller than the storage space that is required by the file to be written in the file write request. For example, an application data folder of a certain application program is created on the built-in SD card, and it is assumed that the application program is a downloading program. Then large space is required to store downloaded files, and therefore the application data folder of the application program needs huge space. It is assumed that the built-in SD card of the terminal has a capacity of 2 G, an external SD card has a capacity of 2 G, and the folder of the application program needs to have a capacity of 3 G. In this case, the storage space that is required by the file to be written in the file write request is larger than original storage space of any storage area, at least two second file paths have to be allocated for the first file path, and the folder of the application program is split and placed in different storage areas. For example, the first file path is /SDcard/file, and in the path mapping list, the first file path corresponds to two second file paths, which, for example, may be /internal_SD/file_a and /external_SD/file_b respectively. In this way, a folder of an application program may be stored on two storage media while the application program can be normally accessed.

S102. Convert the first file path into the second file path according to the path mapping list of the user space file system, where the second file path is an actual storage path of the file in the at least two storage areas.

The conversion is converting the first file path in the access request into the second file path that corresponds to the first file path. In the embodiment of the present invention, content of the path mapping list is not limited, as long as the second file path that corresponds to the first file path can be acquired according to the content of the path mapping list.

For example, the content saved in the path mapping list may be as follows: For each first file path, a second file path expressed in a form of a complete path is included to correspond to the first file path. For example, when the first file path is /SDcard/ttchat, the second file path that corresponds to the first file path may be queried as /internal_SD/ttchat in the path mapping list, and in this case, the second file path stored in the path mapping list may be directly used as the second file path after the conversion. Alternatively, the content saved in the path mapping list may be as follows: For each first file path, a second file path expressed in a form of an abbreviated path is included to correspond to each first file path. For example, in a situation in which the terminal includes a built-in SD card and an external SD card, the abbreviated path may merely indicate that the first file path is a path of the built-in SD card or a path of the external SD card. That is, the abbreviated path may merely indicate a name of an actual storage area of the second file path. For example, when the first file path is /SDcard/ttchat, the second file path that corresponds to the first file path may be queried as /internal_SD in the path mapping list, and in this case, the second file path can be obtained only after the abbreviated path is extended, and the extension is using the internal_SD to replace the SDcard in the first file path to obtain the second file path /internal_SD/ttchat after the conversion. This manner, compared with the manner of saving a complete path, can effectively improve storage efficiency and access efficiency of the path mapping list.

S103. Access the file according to the second file path.

Further and optionally, the accessing the file is executing an access command part of the access request in the second file path.

According to the foregoing steps, at this time the first file path has already been converted into the second file path, that is, a virtual path has been converted into an actual storage path, and accordingly an actual storage area to be actually accessed in the access request can be determined. The storage area refers to different hardware storage areas. For example, the built-in SD card and the external SD card belong to different storage areas. Since the second file path is an actual path at this time, the access request can be executed directly according to the second file path.

In addition, in practical application, a situation in which folders with a same name exist in different storage areas may occur. In this case, names of the folders with the same name may be directly modified, and corresponding second file paths may be modified in the path mapping list.

In the method according to Embodiment 2 of the present invention, a path mapping list is set in a user space file system, so that an original virtual path of a file, that is, a first file path, may be converted according to the path mapping list during file access to obtain an actual storage path to which the access request points, that is, a second file path. The actual storage path is uniformly allocated according to a built-in SD card and an external SD card instead of being allocated merely according to a certain storage card. In this way, a built-in SD card and an external SD card in a smart terminal may be uniformly managed, thereby effectively improving utilization of storage space of the smart terminal. In addition, Embodiment 2 of the present invention has described various situations that may occur during the access according to the path mapping list, and has made a detailed description of the technical solutions provided in the embodiment of the present invention.

Embodiments 3 to 6 are apparatus embodiments of the present invention, and provide apparatuses that are configured to execute the methods implemented in method Embodiments 1 to 2 of the present invention. For ease of description, only a part related to the embodiments of the present invention are illustrated. For specific technical details that are not disclosed, refer to Embodiment 1 and Embodiment 2 of the present invention.

### Embodiment 3

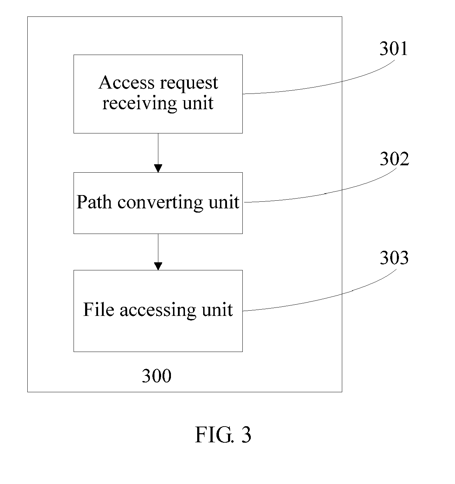

Embodiment 3 of the present invention provides a terminal, configured to execute the methods described in Embodiments 1 to 2 of the present invention. FIG. 3 is a diagram of an apparatus according to Embodiment 3 of the present invention. The following describes in detail the terminal provided in Embodiment 3 of the present invention with reference to FIG. 3. The terminal provided in Embodiment 3 of the present invention includes a user space file system, where when at least two storage areas are set in the terminal, the user space file system is configured to manage the at least two storage areas, and the terminal further includes: an access request receiving unit 301, a path converting unit 302, and a file accessing unit 303.

The access request receiving unit 301 is configured to receive a request for accessing a file, where the access request includes a first file path, the first file path is an access path of the file, and the access path of the file is a virtual path of the file managed by the user space file system.

The path converting unit 302 is configured to convert the first file path into a second file path according to a path mapping list of the user space file system when the first file path points to the user space file system, where the second file path is an actual storage path of the file in the at least two storage areas.

The file accessing unit 303 is configured to access the file according to the second file path.

In the terminal according to Embodiment 3 of the present invention, a path mapping list is set in a user space file system, so that an original virtual path of a file, that is, a first file path, may be converted according to the path mapping list during file access to obtain an actual storage path to which the access request points, that is, a second file path. The actual storage path is uniformly allocated according to a built-in SD card and an external SD card instead of being allocated merely according to a certain storage card. In this way, a built-in SD card and an external SD card in a smart terminal may be uniformly managed, thereby effectively improving utilization of storage space of the smart terminal.

### Embodiment 4

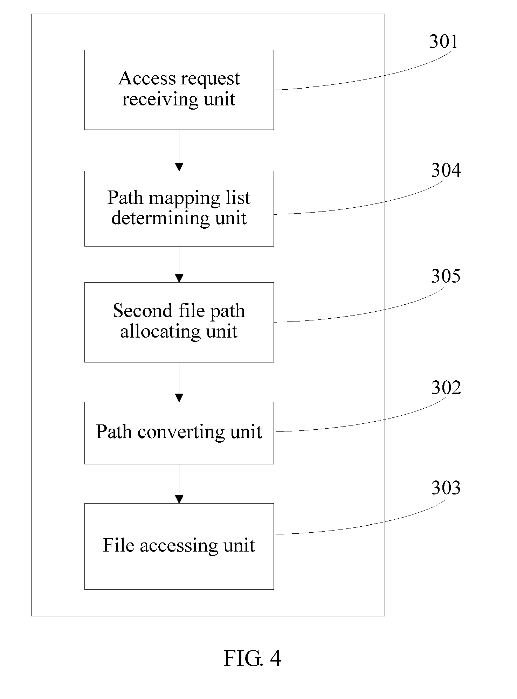

Embodiment 4 of the present invention provides a terminal 400, configured to execute the methods described in Embodiments 1 to 2 of the present invention. FIG. 4 is a diagram of an apparatus according to Embodiment 4 of the present invention. The following describes in detail the terminal provided in Embodiment 4 of the present invention with reference to FIG. 4.

The terminal provided in Embodiment 4 of the present invention includes a user space file system, where when at least two storage areas are set in the terminal, the user space file system is configured to manage the at least two storage areas, and the terminal further includes: an access request receiving unit 301, a path mapping list determining unit 304, a second file path allocating unit 305, a path converting unit 302, and a file accessing unit 303.

The access request receiving unit 301 is configured to receive a request for accessing a file, where the access request includes a first file path and the first file path is an access path of the file.

The request for accessing a file is an access request that points to a file in a storage of the terminal, the access request includes an access path and an access command of the file, and the access path of the file is a virtual path of the file managed by the user space file system, that is, the first file path. For example, the access path usually uses /SDcard as a root menu. For example, the access path may be /SDcard/ttchat. The first file path is included in the access request received by the terminal and belongs to a part of a received input value. A source of the access request may be an application program of the terminal, or may be a third-party program outside the terminal, and this is not limited herein in the embodiment of the present invention. Further, the access request may include a read request and a write request.

In practical application, for example, the access request may occur when a user clicks an application program icon to open an application program, and in this case, the access request is a request of the application program for accessing a file of the application program stored in a storage area of the terminal. The access request may also occur when the application program needs to access another file in the storage area of the terminal, and the another file may be a file such as an image, music, video, or user information file. A relationship between an access subject and an access obj ect of the access request is not limited in the embodiment of the present invention.

The path mapping list determining unit 304 is configured to determine whether a path mapping list of the user space file system includes a second file path related to the first file path when the first file path points to the user space file system. The second file path is an actual storage path of the access request. When a result of the determination is that the path mapping list includes the second file path, the path mapping list determining unit 304 sends an executing command to the path converting unit 302. When the result of the determination is that the path mapping list does not include the second file path, the path mapping list determining unit 304 sends an executing command to the second file path allocating unit 305.

Specifically, in a manner of determining whether the first file path points to the user space file system, by using an Android system as an example, a virtual file system (VFS, Virtual File System) determines, after the access request is received, whether the first file path points to the user space file system. When the first file path points to the user space file system, the VFS sends the access request to the user space file system. That is, the virtual file system determines whether the first file path points to the user space file system, and the first file path is virtually managed by the user space file system and can be accessed only after the user space file system performs address translation. Actually, when the first file path is virtually managed by the user space file system, the first file path is a virtual path and does not point to an actual storage area. In this case, a path mapping list needs to be used to convert the first file path into an actual storage path, that is, the second file path.

The user space file system is FUSE, that is, Filesystem in Userspace, which is a file system completely implemented in a user state. Using the Android system again for an example, memory of the Android system is divided into kernel space and user space. A feature of the FUSE lies in that free switching between the kernel space and the user space can be performed, the kernel space is used to complete functions related to a kernel, and the user space is used to complete functions related to the user space. Therefore, in terms of implementation of the present invention, after receiving the access request, a processor first sends the access request to the VFS of the kernel space for locating. When the VFS determines that the first file path in the access request points to the FUSE, because the VFS does not have a permission of free switching between the kernel space and the user space, the VFS first sends the access request to the kernel space of the FUSE system. Then the kernel space of the FUSE system sends the access request to the user space of the FUSE. Later, the path mapping list converts the first file path into the second file path, and the access request is again sent to the VFS in the kernel space, so that a second access is implemented according to the second file path.

The path mapping list is a list that stores a mapping between the first file path and the second file path related to the first file path, and is content added to the user space file system in the embodiment of the present invention. The path mapping list may be preset according to an initial value of a storage area of the terminal, and updated when the storage area of the terminal changes. A process of the presetting and the updating is: for each first file path for which the path mapping list does not include a mapping, allocating a second file path for a file to be accessed that corresponds to each first file path, and incorporating correspondence between the first file path and the allocated second file path into the path mapping list. Certainly, the foregoing description is only intended to describe implementability of the embodiment of the present invention and shall not be construed as a limitation to the embodiment of the present invention. The change of the storage area includes but is not limited to adding of a storage area or change of content stored in the storage area, and the change of the content stored in the storage area includes but is not limited to adding or deleting of a folder or a folder, modifying of a name, or the like. Preferably, to ensure a query rate during routine use, the path mapping list may be stored as a part of the FUSE system into memory of the user space during routine application and maintenance, and backed up in a storage area of the terminal; and when the path mapping list changes, the path mapping list in the storage area is synchronously backed up; or the path mapping list is periodically backed up. For example, an independent file may be created in a system backup folder of a built-in SD card of the terminal to serve as a backup file of the path mapping list, and is synchronously backed up when the path mapping list changes. In this way, after the terminal is restarted upon power-off, the memory can restore the path mapping list according to the backup file. Certainly and alternatively, the path mapping list may also be stored in a storage area of the terminal, and accessed each time the path mapping list needs to be used.

The second file path allocating unit 305 is configured to allocate, when the path mapping list does not include a second path related to the first file path and the access request is a write request, a second file path to the file, and write a mapping between the first file path and the second file path allocated by the second file path allocating unit into the path mapping list, where the second file path is an actual storage path of the file in the at least two storage areas, and available storage space of a storage area to which the allocated second file path points is no smaller than storage space that is required by a file to be written in the write request. Alternatively, when the access request is a read request, path invalid information is returned to prompt the terminal and further prompt the user that the path is invalid, and this is not limited in the embodiment of the present invention.

Optionally, a storage policy may be preset when the second file path is allocated to the file. For example, a storage policy of preferring the built-in SD card may be preset, or a storage policy of preferentially writing into a storage space with relatively large remaining space is used, and this is not limited in the embodiment of the present invention. After the second file path is allocated to the file, the mapping between the first file path and the allocated second file path is written into the path mapping list. A specific writing format is determined by a current format of the path mapping list. For details, refer to a description of content about the path mapping list for an access request executing unit 303.

In addition, it should be noted that when the second file path is allocated to the file, the available storage space of the storage area to which the allocated second file path points needs to be no smaller than the storage space that is required by the file to be written in the write request. When available storage space of any storage area of the terminal is smaller than the storage space that is required by the file to be written in the write request, the following processing may be performed according to different situations:

When original storage space of the storage area is no smaller than the storage space that is required by the file to be written in the write request, at least two second file paths may be allocated to the file, so that a sum of available storage space of at least two storage areas to which the at least two second file paths point is no smaller than the storage space that is required by the file to be written in the file write request. Certainly and preferably, a file storage location may be adjusted between the storage areas to ensure that available storage space of at least one storage area is no smaller than the storage space that is required by the file to be written in the file write request. For example, an application data folder of a certain application program is created on the built-in SD card, and remaining space of the built-in SD card keeps decreasing as application data keeps growing, thereby causing a problem of insufficient available storage space. In this case, a folder may be adjusted between storage areas. For example, the application data folder of the application program may be wholly transferred to another storage area with sufficient available storage space (or another folder on the built-in SD card is transferred to another storage area, where adjustment may be flexibly performed according to a basic principle of storing folders of a same application program into a same storage area). This ensures that all application data of the application program is stored in the same storage area. On one hand, efficiency of the application program in accessing the application data is ensured; on the other hand, an application directory of the application program does not need to be split, thereby reducing a size of the path mapping list as much as possible and improving storage efficiency.

When the original storage space of the storage area is smaller than the storage space that is required by the file to be written in the write request, it cannot be ensured that available storage space of at least one storage area is no smaller than the storage space that is required by the file to be written in the file write request, even if the file storage location is adjusted. Therefore, in this case, at least two second file paths need to be allocated for the first file path, so that a sum of available storage space of at least two storage areas to which the at least two second file paths point is no smaller than the storage space that is required by the file to be written in the file write request. For example, an application data catalogue folder of a certain application program is created on the built-in SD card, and it is assumed that the application program is a downloading program. Then large space is required to store downloaded files, and therefore the application data folder of the application program needs huge space. It is assumed that the built-in SD card of the terminal has a capacity of 2 G, an external SD card has a capacity of 2 G, and the folder of the application program needs to have a capacity of 3 G. In this case, the storage space that is required by the file to be written in the file write request is larger than original storage space of any storage area, at least two second file paths have to be allocated for the first file path, and the folder of the application program is split and placed in different storage areas. For example, the first file path is /SDcard/file, and in the path mapping list, the first file path corresponds to two second file paths, which, for example, may be /internal_SD/file_a and /external_SD/file_b respectively. In this way, a folder of an application program may be stored on two storage media while the application program can be normally accessed.

Therefore, for whichever of the foregoing situations, the second file path allocating unit 304 may include: a second file path allocating subunit 304A, configured to allocate at least two second file paths to the first file path from the path mapping list when the storage space that is required by the file to be written in the file write request is larger than available storage space of any storage area, so that a sum of available storage space of at least two storage areas to which the at least two second file paths point is no smaller than the storage space that is required by the file to be written in the file write request.

The path converting unit 302 is configured to convert the first file path into the second file path according to the path mapping list of the user space file system when the first file path points to the user space file system, where the second file path is an actual storage path of the file in the at least two storage areas.

The conversion is converting the first file path in the access request into the second file path that corresponds to the first file path. In the embodiment of the present invention, content of the path mapping list is not limited, as long as the second file path that corresponds to the first file path can be acquired according to the content of the path mapping list.

For example, the content saved in the path mapping list may be as follows: For each first file path, a second file path expressed in a form of a complete path is included to correspond to each first file path. For example, when the first file path is /SDcard/ttchat, the second file path that corresponds to the first file path may be queried as /internal_SD/ttchat in the path mapping list, and in this case, the second file path stored in the path mapping list may be directly used as the second file path after the conversion. Alternatively, the content saved in the path mapping list may be as follows: For each first file path, a second file path expressed in a form of an abbreviated path is included to correspond to each first file path. For example, in a situation in which the terminal includes a built-in SD card and an external SD card, the abbreviated path may merely indicate that the first file path is a path of the built-in SD card or a path of the external SD card. That is, the abbreviated path may merely indicate a name of an actual storage area of the second file path. For example, when the first file path is /SDcard/ttchat, the second file path that corresponds to the first file path may be queried as /internal_SD in the path mapping list, and in this case, the second file path can be obtained only after the abbreviated path is extended, and the extension is using the internal_SD to replace the SDcard in the first file path to obtain the second file path /internal_SD/ttchat after the conversion. This manner, compared with the manner of saving a complete path, can effectively improve storage efficiency and access efficiency of the path mapping list.

The file accessing unit 303 is configured to access the file according to the second file path.

Further and optionally, the accessing the file is executing an access command part of the access request in the second file path.

According to the foregoing steps, at this time the first file path has already been converted into the second file path, that is, a virtual path has been converted into an actual storage path, and accordingly an actual storage area to be actually accessed in the access request can be determined. The storage area refers to different hardware storage areas. For example, the built-in SD card and the external SD card belong to different storage areas. Since the second file path is an actual path at this time, the access request can be executed directly according to the second file path.

In addition, in practical application, a situation in which folders with a same name exist in different storage areas may occur. In this case, names of the folders with the same name may be directly modified, and corresponding second file paths may be modified in the path mapping list.

In the terminal according to Embodiment 4 of the present invention, a path mapping list is set in a user space file system, so that an original virtual path of a file, that is, a first file path, may be converted according to the path mapping list during file access to obtain an actual storage path to which the access request points, that is, a second file path. The actual storage path is uniformly allocated according to a built-in SD card and an external SD card instead of being allocated merely according to a certain storage card. In this way, a built-in SD card and an external SD card in a smart terminal may be uniformly managed, thereby effectively improving utilization of storage space of the smart terminal. Embodiment 4 of the present invention has described various situations that may occur during the access according to the path mapping list when the terminal is used, and has made a detailed description of the technical solutions provided in the embodiment of the present invention.

### Embodiment 5

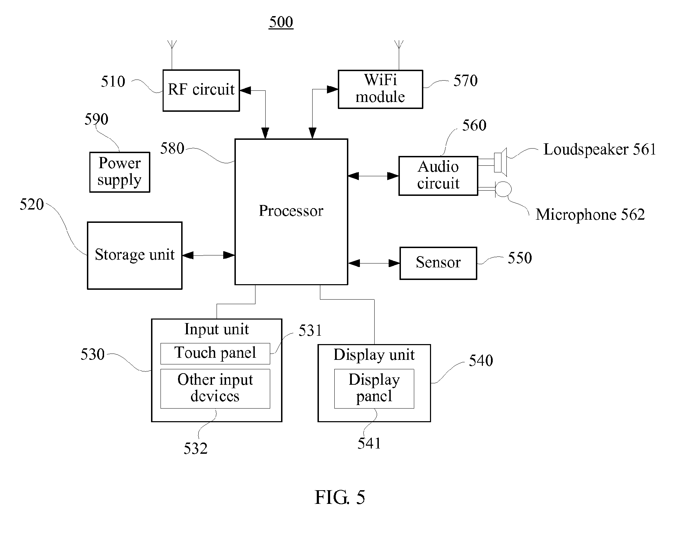

Embodiment 5 of the present invention provides a terminal, which may be configured to execute the methods described in Embodiments 1 to 2 of the present invention. FIG. 5 shows a structure of a terminal 500 according to Embodiment 5 of the present invention.

The terminal may be a terminal device, including a mobile phone, a tablet computer, a PDA (Personal Digital Assistant, personal digital assistant), a POS (Point of Sales, point of sales), a vehicle-mounted computer, or the like. Using a mobile phone as an example of the terminal, FIG. 5 shows a block diagram of a partial structure, of a mobile phone 500, related to the terminal provided in the embodiment of the present invention. Referring to FIG. 5, the mobile phone 500 includes components, such as an RF (Radio Frequency, radio frequency) circuit 510, a storage 520, an input unit 530, a display unit 540, a sensor 550, an audio circuit 560, a WiFi (wireless fidelity, wireless fidelity) module 570, a processor 580, and a power supply 590. A person skilled in the art may understand that the mobile phone structure shown in FIG. 5 is only an example of an implementation manner and shall not be construed as a limitation to the mobile phone, which may include more or fewer components than what are shown in the figure, or combine some components or have different component arrangements.

The following describes in detail each component of the mobile phone 500 with reference to FIG. 5:

The RF circuit 510 may be configured to receive and send a signal in an information receiving and sending or communication process, and in particular, receive downlink information from a base station and send the downlink information to the processor 580 for processing; and send designed uplink data to the base station. Generally, the RF circuit includes but is not limited to an antenna, at least one amplifier, a transceiver, a coupler, an LNA (Low Noise Amplifier, low noise amplifier), a duplexer, or the like. In addition, the RF circuit 510 may further communicate with a network or other devices through wireless communication. The wireless communication may use any communications standard or protocol, including but not limited to GSM (Global System of Mobile communication, Global System for Mobile Communications), GPRS (General Packet Radio Service, General Packet Radio Service), CDMA (Code Division Multiple Access, Code Division Multiple Access), WCDMA (Wideband Code Division Multiple Access, Wideband Code Division Multiple Access), LTE (Long Term Evolution, Long Term Evolution), Email, SMS (Short Messaging Service, Short Messaging Service), or the like.

The storage 520 may be configured to store a software program and a module. The processor 580 executes each functional application and data processing of the mobile phone 500 by running the software program and the module stored on the storage 520. The storage 520 may mainly include a program storing area and a data storing area, where the program storing area may store an operating system, at least one application program required by a function (such as an audio playing function or an image playing function), and the like; and the data storing area may store data (such as audio data or a phonebook) created according to use of the mobile phone 500, and the like. In addition, the storage 520 may include a high-speed random access memory and may further include a non-volatile memory, such as at least one disk storage device, a flash memory, or another volatile solid-state memory.

The input unit 530 may be configured to receive an input digit or character information, and generate key signal inputs that are related to user settings and functional control of the mobile phone 500. Specifically, the input unit 530 may include a touch panel 531 and another input device 532. The touch panel 531, also called a touchscreen, is capable of collecting a touch operation (such as an operation performed by a user on the touch panel 531 or nearby the touch panel 531 by using any appropriate object or accessory, such as a finger or a touch pen) performed by the user on or nearby itself, and drive a corresponding connecting apparatus according to a preset procedure. Optionally, the touch panel 531 may include two parts: a touch detecting apparatus and a touch controller. The touch detecting apparatus detects a touch position of the user, detect a signal brought by the touch operation, and transfer the signal to the touch controller. The touch controller receives touch information from the touch detecting apparatus, converts the touch information into contact coordinates, and then sends the contact coordinates to the processor 580; and is also capable of receiving and executing a command sent by the processor 580. In addition, the touch panel 531 may be implemented by using multiple types, such as a resistor type, a capacitor type, infrared, or a surface acoustic wave. The input unit 530 may further include the another input device 532 in addition to the touch panel 531. Specifically, the another input device 532 may include but is not limited to one or more of a physical keyboard, a functional key (such as a sound volume control key or a switch key), a track ball, a mouse, an operating alarm, and the like.

The display unit 540 may be configured to display information input by the user or information provided to the user, and various menus of the mobile phone 500. The display unit 540 may include a display panel 541. Optionally, the display panel 541 may be configured in the form of an LCD (Liquid Crystal Display, liquid crystal display), an OLED (Organic Light-Emitting Diode, organic light-emitting diode), or the like. Further, the touch panel 531 may cover the display panel 541. When detecting a touch operation on or nearby the touch panel 531, the touch panel 531 transfers the touch operation to the processor 580 so as to determine a type of a touch event. Then the processor 580 provides corresponding visual outputs on the display panel 541 according to the type of the touch event. Although the touch panel 531 and the display panel 541 shown in FIG. 5 serve as two independent components to implement input and input functions of the mobile phone 500, in some embodiments, the touch panel 531 and the display panel 541 may be integrated to implement the input and output functions of the mobile phone 500.

The mobile phone 500 may further include at least one sensor 550, such as a light sensor, a motion sensor, or another sensor. Specifically, the light sensor may include an ambient light sensor and a proximity sensor. The ambient light sensor may adjust brightness of the display panel 541 according to brightness or darkness of an ambient light. The proximity sensor may switch off the display panel 541 and/or a backlight when the mobile phone 500 moves to an ear. As a kind of a motion sensor, an accelerometer sensor can detect an acceleration in each direction (generally three axes), and can detect a size and a direction of gravity in a standstill, which can be used for an application (such as switching between a horizontal screen and a vertical screen, a relevant game, or magnetometer pose calibration) for identifying a mobile phone pose, a function (such as a pedometer or a knock) related to vibration identification, or the like. For other sensors, such as a gyroscope, a barometer, a humidity meter, a thermometer, or an infrared sensor, that may be configured for the mobile phone 500, no further details are provided herein.

The audio circuit 560, a loudspeaker 561, and a microphone 562 may provide an audio interface between the user and the mobile phone 500. The audio circuit 560 can transmit an electrical signal that is converted from received audio data to the loudspeaker 561, and the loudspeaker 561 converts the electrical signal into an audio signal to be output. On the other hand, the microphone 562 converts a collected audio signal into an electrical signal; the audio circuit 560 receives the electrical signal and converts the electrical signal into audio data, and then outputs the audio data to the processor 580 for processing; and the audio data is sent through the RF circuit 510 to, for example, another mobile phone, or the audio data is output to the storage 520 for further processing.

WiFi belongs to a short-haul radio transmission technology. The mobile phone 500 may help, through the WiFi module 570, the user in sending or receiving an Email, browsing a web page, accessing streaming media, or the like, and provides the user with wireless broadband Internet access. Although FIG. 5 has shown the WiFi module 570, it may be understood that the WiFi module 570 is not a mandatory component of the mobile phone 500 and may be completely omitted as necessary without changing an essential scope of the present invention.

As a control center of the mobile phone 500, the processor 580 connects each part of the entire mobile phone by using various interfaces and lines; and executes various functions and data processing of the mobile phone 500 by running or executing the software program and/or the module stored on the storage 520 and by invoking data stored on the storage 520, so as to monitor the mobile phone on a whole. Optionally, the processor 580 may include one or more processing units; and preferably, the processor 580 may integrate an application processor and a modulation/demodulation processor. The application processor mainly processes an operating system, a user interface, an application program, and the like, and the modulation/demodulation processor mainly processes wireless communication. It may be understood that the modulation/demodulation processor is not necessarily integrated in the processor 580.

The mobile phone 500 may further include the power supply 590 (such as a battery) that supplies power to each component. Preferably, the power supply may be logically connected to the processor 580 through a power management system, so as to implement functions such as charging management, discharging management, and power consumption management through the power management system.

Although not shown, the mobile phone 500 may further include a camera, a Bluetooth module, and the like, and no further details are provided herein.

In the embodiment of the present invention, the storage 520 included in the terminal includes a user space file system. When the storage includes at least two storage areas, the user space file system manages the at least two storage areas and the processor 580 has the following functions:
receiving a request for accessing a file, where the access request includes a first file path and the first file path is an access path of the file;
converting the first file path into a second file path according to a path mapping list of the user space file system when the first file path points to the user space file system, where the second file path is an actual storage path of the file in the at least two storage areas; and
accessing the file according to the second file path.

The access path of the file is a virtual path of the file managed by the user space file system, and the at least two storage areas may include a built-in SD card and an external SD card in the terminal.

In the terminal according to Embodiment 5 of the present invention, a path mapping list is set in a user space file system, so that an original virtual path of a file, that is, a first file path, may be converted according to the path mapping list during file access to obtain an actual storage path to which the access request points, that is, a second file path. The actual storage path is uniformly allocated according to a built-in SD card and an external SD card instead of being allocated merely according to a certain storage card. In this way, a built-in SD card and an external SD card in a smart terminal may be uniformly managed, thereby effectively improving utilization of storage space of the smart terminal.

### Embodiment 6

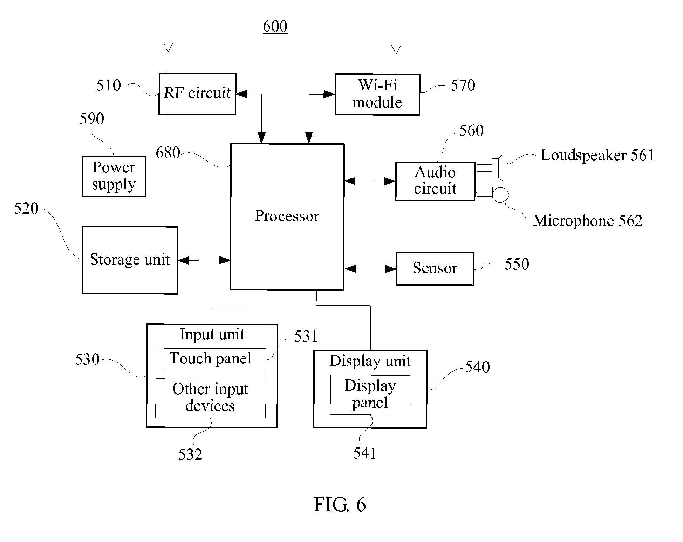

Embodiment 6 of the present invention provides a terminal, which may be configured to execute the methods described in Embodiments 1 to 2 of the present invention. FIG. 6 shows a structure of a terminal 600 according to Embodiment 5 of the present invention. Embodiment 6 of the present invention uses the terminal 500 provided by Embodiment 5 of the present invention, except that a processor 680 is used instead to replace the processor 580 of the terminal 500.

Same as Embodiment 5, the storage 520 of the terminal 600 includes a user space file system. When the storage includes at least two storage areas, the user space file system manages the at least two storage areas and the processor 680 includes the following functions:
receiving a request for accessing a file, where the access request includes a first file path and the first file path is an access path of the file;
determining whether a path mapping list of the user space file system includes a second file path related to the first file path when the first file path points to the user space file system;
when the path mapping list does not include a second file path related to the first file path and the access request is a write request, allocating a second file path to the file and writing a mapping between the first file path and the allocated second file path into the path mapping list; or
when the path mapping list includes a second file path related to the first file path, converting the first file path into a second file path according to the path mapping list, where the second file path is an actual storage path of the file in the at least two storage areas; and
accessing the file according to the second file path.

The request for accessing a file is an access request that points to a file in a storage of the terminal, the access request includes an access path and an access command of the file, and the access path of the file is a virtual path of the file managed by the user space file system, that is, the first file path. Further, the access request includes a read request and a write request. For details about the access request, refer to Embodiment 2 of the present invention.

The path mapping list is a list that stores the mapping between the first file path and the second file path related to the first file path; and the path mapping list is preset according to an initial value of a storage area of the terminal, and updated when the storage area of the terminal changes. For details and content about the path mapping list, refer to Embodiment 2 of the present invention.

For a manner of the determining whether the first file path points to the user space file system and a manner of the determining whether the path mapping list includes the second file path related to the first file path, refer to Embodiment 2 of the present invention.

For a manner of the allocating a second file path to the file, refer to Embodiment 2 of the present invention. It should be noted that available storage space of a storage area to which the allocated second file path points needs to be no smaller than storage space that is required by a file to be written in the write request. When the storage space that is required by the file to be written in the file write request is larger than available storage space of any storage area, there are different processing manners for different situations. For details, refer to Embodiment 2 of the present invention. For whichever situation, a method that may be applied is: allocating at least two second file paths for the first file path, so that a sum of available storage space of at least two storage areas to which the at least two second file paths point is no smaller than the storage space that is required by the file to be written in the file write request.

In the terminal according to Embodiment 6 of the present invention, a path mapping list is set in a user space file system, so that an original virtual path of a file, that is, a first file path, may be converted according to the path mapping list during file access to obtain an actual storage path to which the access request points, that is, a second file path. The actual storage path is uniformly allocated according to a built-in SD card and an external SD card instead of being allocated merely according to a certain storage card. In this way, a built-in SD card and an external SD card in a smart terminal may be uniformly managed, thereby effectively improving utilization of storage space of the smart terminal. In addition, Embodiment 6 of the present invention has described various situations that may occur during the access according to the path mapping list, and has made a detailed description of the technical solutions provided in the embodiment of the present invention.

The foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, as long as such modifications or replacements do not cause the essence of corresponding technical solutions to depart from the spirit and scope of the technical solutions of the embodiments of the present invention.

It should be noted that persons of ordinary skill in the art may understand that all or a part of the steps in the embodiments may be implemented by hardware or by a program instructing relevant hardware. The program may be stored in a computer readable storage medium. The storage medium may be a read-only memory, a flash memory, a magnetic disk, an optical disk, a hard disk, or the like. When the program is run, the following steps are included: receiving a request for accessing a file, where the access request includes a first file path and the first file path is an access path of the file; converting the first file path into a second file path according to a path mapping list of the user space file system when the first file path points to the user space file system, where the second file path is an actual storage path of the file in the at least two storage areas; and accessing the file according to the second file path.

## Claims

1. A method for accessing a file of a terminal, wherein the terminal comprises a user space file system; and when at least two storage areas are set in the terminal, the user space file system is configured to manage the at least two storage areas, the method comprising:
receiving a request for accessing a file, wherein the access request comprises a first file path and the first file path is an access path of the file;
converting the first file path into a second file path according to a path mapping list of the user space file system when the first file path points to the user space file system, wherein the second file path is an actual storage path of the file in the at least two storage areas; and
accessing the file according to the second file path.

2. The method according to claim 1, wherein the access request comprises at least one of a read request and a write request.

3. The method according to claim 1 or 2, wherein after the first file path points to the user space file system and before the first file path is converted into the second file path according to the path mapping list of the user space file system, the method further comprises:
when the path mapping list does not comprise a second file path related to the first file path and the access request is a write request, allocating a second file path to the file and writing a mapping between the first file path and the allocated second file path into the path mapping list, wherein
available storage space of a storage area to which the allocated second file path points is no smaller than storage space that is required by a file to be written in the write request.

4. The method according to claim 3, wherein the allocating a second file path to the file comprises:
when the storage space that is required by the file to be written in the file write request is larger than available storage space of any storage area, allocating at least two second file paths to the first file path from the path mapping list, so that a sum of available storage space of at least two storage areas to which the at least two second file paths point is no smaller than the storage space that is required by the file to be written in the file write request.

5. A terminal, wherein the terminal comprises a user space file system, wherein when at least two storage areas are set in the terminal, the user space file system is configured to manage the at least two storage areas, and the terminal further comprises:
an access request receiving unit, configured to receive a request for accessing a file, wherein the access request comprises a first file path and the first file path is an access path of the file;
a path converting unit, configured to convert the first file path into a second file path according to a path mapping list of the user space file system when the first file path points to the user space file system, and the second file path is an actual storage path of the file in the at least two storage areas; and
a file accessing unit, configured to access the file according to the second file path.

6. The terminal according to claim 5, wherein the access request comprises at least one of a read request and a write request.

7. The terminal according to claim 5 or 6, further comprising:
a path mapping list determining unit, configured to determine whether the path mapping list comprises a second file path related to the first file path when the first file path points to the user space file system, and send an executing command to a second file path allocating unit when a result of the determination is no; and
the second file path allocating unit, configured to allocate, when the result of the determination performed by the path mapping list determining unit is no and the access request is a write request, a second file path to the file, and write a mapping between the first file path and the allocated second file path into the path mapping list, wherein available storage space of a storage area to which the allocated second file path points is no smaller than storage space that is required by a file to be written in the write request.

8. The terminal according to claim 7, wherein the second file path allocating unit comprises:
a second file path allocating subunit, configured to allocate at least two second file paths to the first file path from the path mapping list when the storage space that is required by the file to be written in the file write request is larger than available storage space of any storage area, so that a sum of available storage space of at least two storage areas to which the at least two second file paths point is no smaller than the storage space that is required by the file to be written in the file write request.

9. A terminal, comprising a processor and a storage, wherein the storage comprises a user space file system; and when the storage comprises at least two storage areas, the user space file system manages the at least two storage areas, and the processor is configured to execute the following process:
receiving a request for accessing a file, wherein the access request comprises a first file path and the first file path is an access path of the file;
converting the first file path into a second file path according to a path mapping list of the user space file system when the first file path points to the user space file system, wherein the second file path is an actual storage path of the file in the at least two storage areas; and
accessing the file according to the second file path.

10. The terminal according to claim 9, wherein the access request comprises at least one of a read request and a write request.

11. The terminal according to claim 9 or 10, wherein after the first file path points to the user space file system and before the first file path is converted into the second file path according to the path mapping list of the user space file system, the processor is further configured to execute the following process:
when the path mapping list does not comprise a second file path related to the first file path and the access request is a write request, allocating a second file path to the file and writing a mapping between the first file path and the allocated second file path into the path mapping list, wherein
available storage space of a storage area to which the allocated second file path points is no smaller than storage space that is required by a file to be written in the write request.

12. The terminal according to claim 11, wherein a process of allocating, by the processor, a second file path to the file comprises:
when the storage space that is required by the file to be written in the file write request is larger than available storage space of any storage area, allocating at least two second file paths to the first file path from the path mapping list, so that a sum of available storage space of at least two storage areas to which the at least two second file paths point is no smaller than the storage space that is required by the file to be written in the file write request.
